## Europäisches Patentamt

## European Patent Office

## Office européen des brevets

(19)

(11) Veröffentlichungsnummer : **0 070 439**
**B1**

(12) **EUROPÄISCHE PATENTSCHRIFT**

(45) Veröffentlichungstag der Patentschrift :
18.06.86

(51) Int. Cl.⁴ : **B 60 R 22/32**, B 26 B 3/00

(21) Anmeldenummer : 82105916.9

(22) Anmeldetag : 02.07.82

(54) Gerät zum schnellen Lösen von passiven Rückhaltemitteln an Kraftfahrzeugen in Notfällen.

(30) Priorität : 09.07.81 DE 3127044
02.07.82 DE 3224821

(43) Veröffentlichungstag der Anmeldung :
26.01.83 Patentblatt 83/04

(45) Bekanntmachung des Hinweises auf die Patenterteilung : 18.06.86 Patentblatt 86/25

(84) Benannte Vertragsstaaten :
AT BE CH FR GB IT LI NL SE

(56) Entgegenhaltungen :
DE-A- 2 605 477
DE-U- 7 623 799
US-A- 3 673 687

(73) Patentinhaber : Villinger, Franz
Hohenstaufenstrasse 16
D-7321 Börtlingen (DE)

Reinhardt, Albert
Heuhof 3
D-7321 Wäschenbeuren (DE)

Löffler, Hans
Frühlingstrasse 15
D-7324 Rechberghausen (DE)

(72) Erfinder : Villinger, Franz
Hohenstaufenstrasse 16
D-7321 Börtlingen (DE)
Erfinder : Reinhardt, Albert
Heuhof 3
D-7321 Wäschenbeuren (DE)
Erfinder : Löffler, Hans
Frühlingstrasse 15
D-7324 Rechberghausen (DE)

**Beschreibung**

Die Erfindung betrifft ein Gerät zum schnellen Lösen von passiven Insassen-Rückhaltemitteln an Kraftfahrzeugen, insbesondere Anschnallgurten, in Notfällen ohne Öffnen der im Normalbetrieb zu bedienenden Gurt-Schlösser gemäss dem Oberbegriff des Anspruches 1. Ein solches Gerät ist in DE-A-2 605 477 beschrieben und dargestellt. Obgleich es statistisch erwiesen ist, daß durch Anlegen von Anschnallgurten die Gefahr von schweren und schwersten Verletzungen der Insassen bei Unfällen erheblich verringert werden kann, und deshalb auch die Ausrüstung der Kraftfahrzeuge mit Anschnallgurten sowie deren Benutzung seit einiger Zeit behördlich vorgeschrieben worden ist, werden die Anschnallgurte bisher nur von etwa der Hälfte der Kraftfahrzeug-Insassen tatsächlich regelmäßig benutzt. Die Ursache für das Nichtanlegen der Gurte besteht — außer einer gewissen Unbequemlichkeit — bei vielen Kraftfahrzeug-Benutzern auch in der Besorgnis, daß die Gurte nach einem Unfall von ihnen selbst oder hinzukommenden Helfern nicht schnell genug gelöst werden könnten, um z. B. im Falle eines ausbrechenden Brandes unverzüglich aus dem Fahrzeug herauszukommen. Diese Besorgnis ist vor allem deshalb auch keineswegs ganz unberechtigt, weil eine große Zahl unterschiedlich zu bedienender Gurt-Schlösser existiert und sich diese außerdem an vor allem von außen oft schwer zugänglichen Stellen im Fahrzeug befinden.

In DE-A-2 605 477 ist bereits eine « Einrichtung zum Aufschneiden von Sicherheitsgurten » mit einem Griffteil in Form eines eine Öse aufweisenden Halters zum Halten eines plattenförmigen Messerträgers bei der Schneidoperation beschrieben worden. Bei dieser vorbekannten Einrichtung wies der Messerträger bereits einen unter einem ersten spitzen Winkel zu dessen Bewegungsrichtung beim Schneiden liegenden Bandführungsschlitz, ein Messer mit einer unter einem zweiten spitzen Winkel zur genannten Bewegungsrichtung liegenden Schneide und Führungsmittel für die Ablenkung der beim Schneiden entstandenen Bandenden des Sicherheitsgurtes auf. Dieses bekannte Gerät war jedoch — wie aus seiner Formgebung und insbesondere seiner Ausstattung mit einer so großen gesonderten Halteöse, die das Halten der Schneideinrichtung mit der geschlossenen Hand ermöglichte, deutlich zu entnehmen und auch beschrieben ist — dazu bestimmt, « ohne große Investitionen überall dort bereitgestellt zu werden, wo die Möglichkeit eines überraschend eintretenden Bedarfsfalles besteht ». Es war jedoch nicht dazu bestimmt und geeignet, als einfaches Hilfsgerät in jedem Kraftfahrzeug an gut sichtbarer und leicht zugänglicher Stelle angebracht und ständig mitgeführt zu werden.

In DE-U-7 623 799 ist ebenfalls ein für den gleichen Zweck verwendbares Schneidgerät beschrieben und dargestellt worden, das einen Griffteil und einen hakenförmigen Kopfteil mit einem sich verengenden Schlitz sowie ein schräg zum Schlitz verlaufendes Messer aufweist. Bei diesem vorbekannten Gerät weist der sich an den Griffteil anschließende Schneidkopf einen schnabelförmigen Führungsansatz auf, der einseitig schräg gegenüber dem Schneidkopf in Richtung auf den Griffteil nach hinten absteht und zwischen sich und dem Schneidkopf einen sich zum Schneidkopf hin verjüngenden verhältnismäßig kurzen Einzugskanal für einen zu zerschneidenden Gurt oder einen anderen Werkstoff bildet. Dieses vorbekannte Schneidgerät besitzt eine im Hinblick auf seine beabsichtigte vielseitige Verwendbarkeit gewählte Gestalt und ist nur zum Unterbringen in einem Aufbewahrungsbehälter wie z. B. dem Verbandskasten eines Kraftfahrzeuges geeignet, wie aus dem Fehlen von Mitteln zum griffbereiten sicheren Befestigen an einer gut sichtbaren und zugänglichen Stelle eines Kraftfahrzeuges hervorgeht.

Aufgabe der Erfindung ist es, ein einfaches in jedem Kraftfahrzeug an gut zugänglicher Stelle leicht anzubringendes Gerät zu schaffen, mit dem die Anschnallgurte in Notfällen — ohne Benutzung der Gurt-Schlösser — von den Insassen selbst oder hinzukommenden Helfern gelöst werden können. Diese Aufgabe ist erfindungsgemäß im wesentlichen durch ein Gerät gemäß dem kennzeichnenden Teil des Anspruches 1 gelöst worden. Durch eine solche Ausgestaltung ist es gelungen, ein Gerät zu schaffen, das eine besonders platz- und gewichtssparende kompakte Außenform mit entsprechend leichter Anbringungs- und Handhabungsmöglichkeit an einer gut sichtbaren und zugänglichen Stelle im Griffbereich der Fahrzeuginsassen und/oder hinzukommenden Helfern sowie mit größter Zuverlässigkeit beim Gebrauch und Sicherheit gegen jede Verletzungsgefahr in sich vereinigt. Die Ausrüstung der Kraftfahrzeuge mit einem solchen Gerät ist daher dafür geeignet, bei den Fahrzeuginsassen die oben geschilderte Besorgnis wegen eines evtl. « Eingesperrtwerdens » in einem unfallbeschädigten Kraftfahrzeug abzubauen und damit den Benutzungsgrad der Anschnallgurte wesentlich zu erhöhen und damit die Zahl der Unfall-Toten und -Verletzten zu verringern.

Ein weiteres vorteilhaftes Gestaltungsmerkmal des erfindungsgemäßen Gerätes ergibt sich aus dem Anspruch 2 sowie der nachstehenden Beschreibung eines Ausführungsbeispieles an Hand der Zeichnung mit 3 Abbildungen. Von diesen zeigen :

Figur 1 ein Gerät nach der Erfindung in Seitenansicht,

Figur 2 das gleiche Gerät im Grundriß und

Figur 3 einen Schnitt nach der Linie III-III in Figur 2.

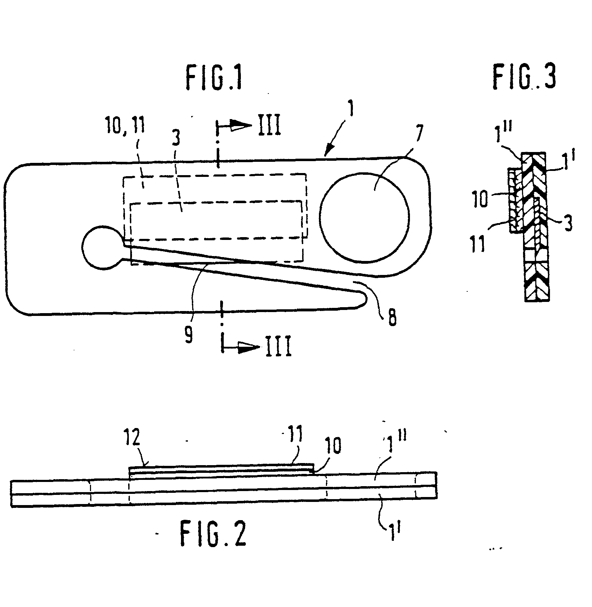

Das in den Figuren 1 bis 3 dargestellte Ausführungsbeispiel eines erfindungsgemäßen Gerätes besitzt einen Griff 1, der aus zwei Kunststoff-Spritzteilen 1', 1" besteht, die in der Geräte-Mittelebene z. B. durch Verkleben, Verschweißen oder dergleichen miteinander verbunden sind. In dem Griff 1 ist zwischen den Teilen 1' und 1" ein dünnes Messer 3 z. B. in einer seinem Umriß angepaßten Aussparung des Griffteiles 1' so gehaltert, daß seine Schneide 9 einen spitzen Winkel mit der Richtung eines von einem Ende des Griffes 1 unten schräg zur Längsachse verlaufenden Schlitzes 8 zum Erfassen und Einführen eines zu zerschneidenden Gurtes bildet. Der Griff 1 weist ferner an dem gleichen Ende, an dem sich die Eintrittsöffnung zu dem Schlitz 8 befindet, eine Durchbrechung 7 auf, zum sicheren Fassen und Aufbringen der erforderlichen — an sich sehr geringen — Zugkraft auf das Gerät beim Zerschneiden eines mit dem Schlitz 8 erfaßten Anschnallgurtes. Zum Anbringen des Gerätes an jeder beliebigen ebenen und gut zugänglichen Stelle eines Kraftfahrzeug-Innenraumes ist der Griff 1 bei dem Ausführungsbeispiel mit einem Teil 10 eines Klettband-Verschlusses 10, 11 fest verbunden, dessen anderes Teil 11 mit einer bis zur Montage abgedeckten Selbstklebefläche 12 versehen ist. Es können im Rahmen der Erfindung jedoch auch klippartie Befestigungsmittel z. B. zum Anbringen an einer Sonnenblende verwendet werden.

**Patentansprüche**

1. Gerät zum schnellen Lösen von passiven Rückhaltemitteln in Form von Anschnallgurten für die Insassen von Kraftfahrzeugen in Notfällen ohne Benutzung der im Normalfall zu betätigenden Gurt-Schlösser mit einem flachen Griffteil (1) mit einem sich verengenden Schlitz (8), der schräg zur Längsachse des Griffes von einer Längsseite zur Mitte verläuft, einem mit seiner Schneide (9) schräg zum Schlitz im Griffteil angeordneten Messer (3) und mit einer Halteöse am Griffteil, dadurch gekennzeichnet, daß der Griffteil (1) eine annähernd rechteckige Form aufweist und als Spritzteil hergestellt ist, daß an einem Ende des Griffteiles (1) eine Durchbrechung (7) angeordnet ist, die etwa dem Durchmesser eines Fingers entspricht, daß der Schlitz (8) in der benachbarten Ecke neben der Durchbrechung (7) beginnt und daß der Griffteil (1) mit einem oder mehreren z. B. klippartigen Halteelementen zum leichlösbaren Befestigen an einem Kraftfahrzeug versehen ist.

2. Gerät nach Anspruch 1, dadurch gekennzeichnet, daß das leichtlösbare Haltemittel aus einem an sich bekannten Klettband-Verschluß besteht, dessen einer Teil (10) mit dem Griffteil (1) fest verbunden und dessen anderer Teil (11) mit einer selbstklebenden Außenfläche (12) zum Anbringen an jeder beliebigen ebenen Fläche eines Kraftfahrzeug-Innenraumes, z. B. am Armaturenbrett, einem Handschuhfach-Deckel oder dergl.

versehen ist.

**Claims**

1. Device for the rapid release of passive retaining means in the form of seat belts for the occupants of motor vehicles in emergencies without using the belt locks which are operated in normal cases, with a flat grip part (1) having a narrowing slot (8) which extends at an inclination relatively to the longitudinal axis of the grip from one long side to the centre, a knife (3) which is situated with its cutting edge (a) obliquely to the slot in the grip part, and with a holding eyelet on the grip part, characterised in that the grip part (1) is of an approximately rectangular form and is produced as an injection moulded part, that an aperture (7) corresponding approximately to the diameter of a finger is arranged at one end of the grip part (1), that the slot (8) begins in the adjacent corner near the aperture (7) and that the grip part (1) is provided with one or more e. g. clip-like holding elements for securing in readily releasable manner to a motor vehicle.

2. Device according to claim 1, characterised in that the readily releasable holding means comprises a per se known velcro strip fastener one portion (10) of which is connected securely to the grip part (1) and whose other portion (11) is provided with a self-adhering outer surface (12) for arrangement on any desired level surface of the interior space of a motor vehicle e. g. on the instrument panel, a glove compartment cover, or the like.

**Revendications**

1. Dispositif d'ouverture rapide de moyens de maintien passifs, sous la forme de ceintures de sécurité pour les occupants de véhicules automobiles, en cas de besoin, sans utilisation des serrures de ceinture à actionner normalement avec une poignée plate (1) comportant une fente (8), qui va en se rétrécissant, obliquement par rapport à l'axe longitudinal de la poignée, depuis l'un des côtés longitudinaux vers le milieu, un couteau (3) comportant un tranchant (a) et orienté obliquement par rapport à la fente de la poignée et un œillet de maintien ménagé dans la poignée, caractérisé en ce que la poignée (1) a une forme approximativement rectangulaire et est fabriquée par projection, en ce que l'une des extrémités de la poignée (1) comporte une ouverture de passage (7) qui correspond approximativement au diamètre d'un doigt, en ce que la fente (8) commence dans le coin voisin de l'ouverture de passage (7) et en ce que la poignée (1) comporte un ou plusieurs éléments de maintien à rabattement assurant une fixation amovible au véhicule automobile.

2. Dispositif selon la revendication 1, caractérisé en ce que le moyen de maintien facile à détacher est constitué par une fermeture à coulisseau connue en elle-même dont l'une des parties (10) est reliée solidement à la poignée (1) et dont l'autre partie (11) comporte une surface extérieure (12) autocollante permettant l'application sur n'importe quelle surface plane de l'intérieur d'un véhicule automobile, par exemple d'un tableau de bord, d'une boîte à gants ou d'une pièce analogue.

FIG.1

FIG.3

FIG.2